# EUROPÄISCHE PATENTANMELDUNG

(11) **EP 3 333 049 A1**
(43) Veröffentlichungstag der Anmeldung: **13.06.2018**
(21) Anmeldenummer: 17203238.5
(22) Anmeldetag: 23.11.2017
(51) Int. Cl.: B62D 15/02, G08G 1/14

(54) **VERFAHREN ZUM AUTONOMEN MANÖVRIEREN EINES KRAFTFAHRZEUGS AUF EINER PARKFLÄCHE MIT BESTIMMUNG EINES FAHRSCHLAUCHS ANHAND EINER DIGITALEN KARTE, INFRASTUKTURVORRICHTUNG, FAHRERASSISTENZSYSTEMEN, KRAFTFAHRZEUGS SOWIE KOMMUNIKATIONSSYSTEMEN**

(30) Priorität: 12.12.2016 DE 102016124065
(71) Anmelder: Valeo Schalter und Sensoren GmbH, 74321 Bietigheim-Bissingen (DE)
(72) Erfinder: Heimberger, Markus, 74321 Bietigheim-Bissingen (DE); Vovkushevsky, Vsevolod, 74321 Bietigheim-Bissingen (DE)

(57) **Zusammenfassung**

Die Erfindung betrifft ein Verfahren zum autonomen Manövrieren eines Kraftfahrzeugs (1) auf einer Parkfläche (11), welche eine Mehrzahl von Stellplätzen (12) für das Kraftfahrzeug (1) aufweist, bei welchem mittels einer Infrastrukturvorrichtung (25) der Parkfläche (11) ein freier Stellplatz (12) der Mehrzahl von Stellplätzen (12) erkannt wird, Manövrierdaten, welche den freien Stellplatz (12) beschreiben, bestimmt werden sowie an ein Fahrerassistenzsystem (2) des Kraftfahrzeugs (1) übertragen werden und das Kraftfahrzeug (1) anhand der Manövrierdaten autonom zu dem freien Stellplatz (12) manövriert wird, wobei mittels der Infrastrukturvorrichtung (21) anhand einer digitalen Karte, welche die Parkfläche (11) beschreibt, zumindest ein Fahrschlauch (25) bestimmt wird, welcher zu dem freien Stellplatz (12) führt und welcher einen Bereich der Parkfläche (11) beschreibt, auf welchem das Kraftfahrzeug (1) während des Manövrierens bewegbar ist, wobei die Manövrierdaten den zumindest einen Fahrschlauch (25) beschreiben und das Kraftfahrzeug (1) mittels des Fahrerassistenzsystems (2) innerhalb des Fahrschlauchs (25) autonom manövriert wird.

## Beschreibung

Die vorliegende Erfindung betrifft ein Verfahren zum autonomen Manövrieren eines Kraftfahrzeugs auf einer Parkfläche, welche eine Mehrzahl von Stellplätzen für das Kraftfahrzeug aufweist. Hierbei wird mittels einer Infrastrukturvorrichtung der Parkfläche ein freier Stellplatz der Mehrzahl von Stellplätzen erkannt, Manövrierdaten, welche den freien Stellplatz beschreiben, werden bestimmt sowie an ein Fahrerassistenzsystem des Kraftfahrzeugs übertragen. Zudem wird das Kraftfahrzeug anhand der Manövrierdaten autonom zu dem freien Stellplatz manövriert. Des Weiteren betrifft die vorliegende Erfindung ein Fahrerassistenzsystem für ein Kraftfahrzeug sowie ein Kraftfahrzeug. Schließlich betrifft die vorliegende Erfindung ein Kommunikationssystem.

Das Interesse richtet sich vorliegend auf Verfahren zum autonomen Manövrieren eines Kraftfahrzeugs auf einer Parkfläche. Eine solche Parkfläche kann beispielsweise ein öffentlicher Parkplatz sein, welcher mehrere Stellplätze zum Abstellen des Kraftfahrzeugs aufweist. Darüber hinaus weisen derartige Parkflächen üblicherweise eine Mehrzahl von Fahrgassen auf, welche zu den Stellplätzen führen. Aus dem Stand der Technik sind bereits Verfahren bekannt, die es ermöglichen, das Kraftfahrzeug autonom auf der Parkfläche zu manövrieren und auf einem freien Stellplatz einzuparken. Dabei kann der Fahrer beispielsweise das Kraftfahrzeug an einem Einfahrtsbereich der Parkfläche abstellen und das Kraftfahrzeug wird anschließend vollautonom innerhalb der Parkfläche zu dem freien Stellplatz manövriert. In gleicher Weise kann das Kraftfahrzeug von dem Stellplatz aus der Parkfläche heraus zu einem Ausfahrtsbereich manövriert werden. Anschließend kann der Fahrer wieder in das Kraftfahrzeug einsteigen. Ein derartiges Verfahren zum autonomen Manövrieren des Kraftfahrzeugs wird auch als Valet-Parken oder Valet-Parking bezeichnet.

In diesem Zusammenhang beschreibt die DE 10 2014 224 073 A1 einen Server zum Betreiben eines Parkplatzes. Dabei umfasst der Server eine Datenbank, in welcher eine digitale Karte des Parkplatzes gespeichert ist. Des Weiteren umfasst der Server einen Prozessor, der dazu ausgebildet ist, eine Zielposition für ein Fahrzeug auf dem Parkplatz und zumindest einen Ausschnitt aus der digitalen Karte zu ermitteln, der einem Teilbereich des Parkplatzes entspricht, welcher von dem Fahrzeug auf seiner Fahrt zur Zielposition autonom durchfahren werden soll. Schließlich umfasst der Server eine Kommunikationsschnittstelle, die dazu ausgebildet ist, den Ausschnitt der digitalen Karte und die Zielposition an das Fahrzeug zu übermitteln.

Des Weiteren beschreibt die DE 10 2009 046 912 A1 ein Verfahren für die Führung eines Fahrzeugs von einer Startposition zu einer Zielposition. Dabei werden dem Fahrzeug an der Startposition Informationen über die Lage der Zielposition und gegebenenfalls über eine Trajektorie, welche die Startposition mit der Zielposition verbindet, übermittelt. Um die vorgeschlagene Trajektorie einhalten zu können, sind auf der Fahrbahn Markierungen angeordnet, die das Fahrzeug mit einem geeigneten Umfeldsensor erfasst. Darüber hinaus kann es vorgesehen sein, dass Odometriedaten des Fahrzeugs mit Landmarken auf der Fahrbahn abgeglichen werden können.

Es ist Aufgabe der vorliegenden Erfindung, eine Lösung aufzuzeigen, wie das autonome Manövrieren eines Kraftfahrzeugs auf einer Parkfläche präziser und zuverlässiger durchgeführt werden kann.

Diese Aufgabe wird erfindungsgemäß durch ein Verfahren, durch eine Infrastrukturvorrichtung, durch ein Fahrerassistenzsystem, durch ein Kraftfahrzeug sowie durch ein Kommunikationssystem mit den Merkmalen gemäß den jeweiligen unabhängigen Ansprüchen gelöst. Vorteilhafte Weiterbildungen der vorliegenden Erfindung sind Gegenstand der abhängigen Ansprüche.

Gemäß einer Ausführungsform eines Verfahrens zum autonomen Manövrieren eines Kraftfahrzeugs auf einer Parkfläche, welche eine Mehrzahl von Stellplätzen für das Kraftfahrzeug aufweist, wird bevorzugt mittels einer Infrastrukturvorrichtung der Parkfläche ein freier Stellplatz der Mehrzahl von Stellplätzen erkannt. Darüber hinaus werden bevorzugt Manövrierdaten, welche den freien Stellplatz beschreiben, bestimmt. Zudem werden die Manövrierdaten bevorzugt an ein Fahrerassistenzsystem des Kraftfahrzeugs übertragen. Darüber hinaus wird das Kraftfahrzeug bevorzugt anhand der Manövrierdaten autonom zu dem freien Stellplatz manövriert. Dabei ist es ferner bevorzugt vorgesehen, dass mittels der Infrastrukturvorrichtung anhand einer digitalen Karte, welche insbesondere die Parkfläche beschreibt, zumindest ein Fahrschlauch bestimmt wird. Dieser zumindest eine Fahrschlauch führt insbesondere zu dem freien Stellplatz und beschreibt bevorzugt einen Bereich auf der Parkfläche, auf welchem das Kraftfahrzeug während des Manövrierens bewegbar ist. Dabei ist es bevorzugt vorgesehen, dass die Manövrierdaten den zumindest einen Fahrschlauch beschreiben. Schließlich wird das Kraftfahrzeug bevorzugt Kraftfahrzeug mittels des Fahrerassistenzsystems innerhalb des zumindest einen Fahrschlauchs autonom manövriert.

Ein erfindungsgemäßes Verfahren dient zum autonomen Manövrieren eines Kraftfahrzeugs auf einer Parkfläche, welche eine Mehrzahl von Stellplätzen für das Kraftfahrzeug aufweist. Hierbei wird mittels einer Infrastrukturvorrichtung der Parkfläche ein freier Stellplatz der Mehrzahl von Stellplätzen erkannt. Ferner werden Manövrierdaten, welche den freien Stellplatz beschreiben, bestimmt sowie an ein Fahrerassistenzsystem des Kraftfahrzeugs übertragen. Zudem wird das Kraftfahrzeug anhand der Manövrierdaten autonom zu dem freien Stellplatz manövriert. Des Weiteren wird mittels der Infrastrukturvorrichtung anhand einer digitalen Karte, welche die Parkfläche beschreibt, zumindest ein Fahrschlauch bestimmt, welcher zu dem freien Stellplatz führt und welcher einen Bereich der Parkfläche beschreibt, auf welchem das Kraftfahrzeug während des Manövrierens bewegbar ist. Zudem beschreiben die Manövrierdaten den zumindest einen Fahrschlauch. Schließlich wird das Kraftfahrzeug mittels des Fahrerassistenzsystems innerhalb des Fahrschlauchs autonom manövriert.

Mit Hilfe des Verfahrens soll das Kraftfahrzeug autonom beziehungsweise vollautonom auf einer Parkfläche manövriert werden. Die Parkfläche weist eine Mehrzahl von Stellplätzen beziehungsweise Parkplätzen auf, auf denen Fahrzeug und auch das Kraftfahrzeug abgestellt beziehungsweise geparkt werden können. Die Parkfläche kann beispielsweise ein öffentlicher Parkplatz, ein privater Parkplatz, eine Tiefgarage oder ein Teil eines Parkhauses sein. Die Parkfläche weist mehrere Fahrgassen auf, entlang welcher das Kraftfahrzeug bewegt werden kann. Dabei führen die jeweiligen Fahrgassen zu den Stellplätzen der Parkfläche. Hierbei kann es zum Beispiel vorgesehen sein, dass das Kraftfahrzeug von dem Fahrer des Kraftfahrzeugs an einem Einfahrtsbereich der Parkfläche abgestellt wird. Ausgehend von dem Einfahrtsbereich wird dann das Kraftfahrzeug mithilfe des Fahrerassistenzsystems des Kraftfahrzeugs autonom auf der Parkfläche beziehungsweise innerhalb der Parkfläche manövriert. Zu diesem Zweck kann das Fahrerassistenzsystem die Längsführung und die Querführung des Kraftfahrzeugs übernehmen. Dies bedeutet, dass das Kraftfahrzeug in eine Lenkung, einen Antriebsmotor und/oder ein Bremssystem des Kraftfahrzeugs eingreifen kann.

Der Parkfläche ist die Infrastrukturvorrichtung zugeordnet, mittels welcher zumindest ein freier Stellplatz der Mehrzahl von Stellplätzen bestimmt werden kann. Zu diesem Zweck kann die Infrastrukturvorrichtung beispielsweise Daten von Belegungssensoren der Parkfläche empfangen, welche beschreiben, ob die jeweiligen Stellplätze belegt oder frei sind. Zudem kann die Infrastrukturvorrichtung einen Speicher aufweisen, auf welchem die digitale Karte der Parkfläche hinterlegt ist. Diese digitale Karte kann grundsätzlich die räumlichen Abmessungen der Parkfläche beschreiben. Zudem kann die digitale Karte die jeweiligen Positionen und räumlichen Abmessungen der Stellplätze beschreiben. Darüber hinaus kann die digitale Karte die jeweiligen Positionen und räumlichen Abmessungen der Fahrgassen beschreiben, welche zu den Stellplätzen führen. Außerdem kann die digitale Karte den Einfahrtsbereich sowie einen Ausfahrtsbereich der Parkfläche beschreiben. Zudem kann die digitale Karte bauliche Elemente der Parkfläche, wie beispielsweise Wände, Säulen oder dergleichen beschreiben. Die digitale Karte kann auch Fahrbahnmarkierungen, die auf den Fahrgassen aufgebracht sind, sowie gegebenenfalls Parkflächenmarkierungen der Stellplätze beschreiben. Darüber hinaus kann die digitale Karte Verkehrsschilder, Hinweisschilder, Leuchten oder dergleichen beschreiben.

Gemäß einem wirklichen Aspekt der Erfindung wird mithilfe der Infrastrukturvorrichtung zumindest ein Fahrschlauch bestimmt. Dieser Fahrschlauch führt zu dem freien Stellplatz, der von der Infrastrukturvorrichtung bestimmt wurde. Beispielsweise führt der zumindest eine Fahrschlauch von einem Einfahrtsbereich der Parkfläche zu dem freien Stellplatz. Der zumindest eine Fahrschlauch ist dabei so bestimmt, dass dieser einen Bereich auf der Parkfläche beschreibt, auf welchem das Kraftfahrzeug manövriert werden kann. Insbesondere beschreibt der zumindest eine Fahrschlauch einen Bereich auf der Parkfläche, auf welchem das Kraftfahrzeug kollisionsfrei manövriert werden kann. Dabei kann der Fahrschlauch innerhalb der Fahrgassen der Parkfläche bestimmt werden. Es kann auch vorgesehen sein, dass der zumindest eine Fahrschlauch zumindest einen Teil von den Stellplätzen, insofern diese frei sind, bedeckt. Da der Infrastrukturvorrichtung Informationen vorliegen, auf welchen Stellplätzen Fahrzeuge geparkt sind, kann der zumindest eine Fahrschlauch so bestimmt werden, dass dieser kollisionsfrei an den geparkten Fahrzeugen vorbeiführt. Die Manövrierdaten, welche den Fahrschlauch beschreiben, werden beispielsweise mittels einer Kommunikationseinrichtung der Infrastrukturvorrichtung an das Fahrerassistenzsystem des Kraftfahrzeugs übertragen. Beispielsweise können die Manövrierdaten an eine Sende- und Empfangseinrichtung des Fahrerassistenzsystems übertragen werden. Mithilfe des Fahrerassistenzsystems kann das Kraftfahrzeug innerhalb des zumindest einen Fahrschlauchs autonom manövriert werden. Dabei ist es insbesondere vorgesehen, dass das Kraftfahrzeug mithilfe des Fahrerassistenzsystems auf Grundlage von Odometrie manövriert wird. Hierbei kann fortlaufend die Bewegung des Kraftfahrzeugs erfasst werden. Beispielsweise können die Umdrehungen zumindest eines Rades des Kraftfahrzeugs aufgezeichnet werden. Ferner kann der aktuelle Lenkwinkel des Kraftfahrzeugs fortlaufend aufgezeichnet werden. Dadurch, dass die Manövrierdaten den Fahrschlauch beschreiben, in welchem das Kraftfahrzeug manövriert werden kann, ist es insbesondere nicht erforderlich, dass die digitale Karte oder Teile davon an das Fahrerassistenzsystem übertragen werden. Somit können die Datenmengen, die von der Infrastrukturvorrichtung an das Fahrerassistenzsystem übertragen werden, reduziert werden. Innerhalb des zumindest einen Fahrschlauchs kann dann das Kraftfahrzeug mithilfe des Fahrerassistenzsystems sichern und zuverlässig manövriert werden.

Bevorzugt wird anhand der digitalen Karte zumindest eine Landmarke der Parkfläche bestimmt und der zumindest einen Fahrschlauch wird relativ zu der zumindest einen Landmarke bestimmt. Bei der digitalen Karte handelt es sich insbesondere um eine hochauflösende Karte, welche die Parkfläche und die Komponenten der Parkfläche präzise beschreibt. Dabei können einzelne Komponenten der Parkfläche als Landmarken genutzt werden. Beispielsweise können die Fahrbahnmarkierungen, die auf den Fahrgassen aufgebracht sind, als Landmarken genutzt werden. Solche Fahrbahnmarkierungen können beispielsweise Richtungspfeile sein. Darüber hinaus können Hinweisschilder oder Verkehrsschilder der Parkfläche als Landmarken genutzt werden. Es können auch Wände, Säulen oder andere bauliche Elemente der Parkfläche als Landmarken genutzt werden. Grundsätzlich können alle Bestandteile beziehungsweise Komponenten der Parkfläche als Landmarken verwendet werden. Dabei wird der zumindest eine Fahrschlauch relativ zu den Landmarken bestimmt. Dabei ist es insbesondere vorgesehen, dass die Manövrierdaten zusätzlich die Landmarken beschreiben. Insbesondere beschreiben die Manövrierdaten die relative Lage des Fahrschlauchs zu den Landmarken. Damit liegen dem Fahrerassistenzsystem neben Informationen zu dem zumindest einen Fahrschlauch auch Informationen zu den Landmarken vor. Diese können von dem Fahrerassistenzsystem zum autonomen Manövrieren des Kraftfahrzeugs genutzt werden.

Gemäß einer Ausführungsform wird während des Manövrierens des Kraftfahrzeugs mittels zumindest eines Umfeldsensors eine relative Lage des Kraftfahrzeugs zu der zumindest einen Landmarke bestimmt und das Kraftfahrzeug wird in Abhängigkeit von der relativen Lage manövriert. Das Fahrerassistenzsystem kann zumindest einen Umfeldsensor aufweisen, mit dem die Landmarken in der Umgebung des Kraftfahrzeugs beziehungsweise auf der Parkfläche erfasst werden können. Bei dem zumindest einen Umfeldsensor kann es sich bei dem Ultraschallsensor, einen Radarsensor, einen Lidar-Sensor oder einen Laserscanner handeln. Bevorzugt ist es aber vorgesehen, dass es sich bei den zumindest einen Umfeldsensor um eine Kamera handelt. Mit dieser Kamera können fortlaufend Bilder bereitgestellt werden, welche die Umgebung des Kraftfahrzeugs und somit die Landmarken der Parkfläche beschreiben. Zudem ist es bevorzugt vorgesehen, dass das Fahrerassistenzsystem eine Mehrzahl von Umfeldsensoren aufweist, welche beispielsweise verteilt an dem Kraftfahrzeug angeordnet sein können. Es kann auch vorgesehen sein, dass das Fahrerassistenzsystem unterschiedliche Typen von Umfeldsensor aufweist. Mit den Umfeldsensoren können Objektdaten bereitgestellt werden, welche die Parkfläche und insbesondere die Landmarken der Parkfläche beschreiben. Auf Grundlage der Objektdaten kann dann mithilfe des Fahrerassistenzsystems die relative Lage zwischen dem Kraftfahrzeug und den jeweiligen Landmarken bestimmt werden. Wie bereits erläutert, wird das Kraftfahrzeug mittels des Fahrerassistenzsystems auf Grundlage von Odometrie manövriert. Dabei ist es üblicherweise der Fall, dass bei der Odometrie entsprechende Fehler beziehungsweise Abweichungen auftreten können. Dadurch, dass die relative Lage zwischen dem Kraftfahrzeug und den Landmarken bestimmt wird, können die Fehler in der Odometrie ausgeglichen werden. Auf diese Weise kann das Kraftfahrzeug präzise autonom auf der Parkfläche manövriert werden.

Gemäß einer Ausführungsform führt der zumindest eine Fahrschlauch von einem Einfahrtsbereich der Parkfläche zu dem freien Stellplatz. Dabei ist der Einfahrtsbereich insbesondere einer Einfahrt der Parkfläche zugeordnet. Somit wird es insbesondere ermöglicht, dass der Fahrer das Kraftfahrzeug an dem Einfahrtsbereich abstellen kann. Dort kann der Fahrer aus dem Kraftfahrzeug aussteigen. Nachdem das Fahrerassistenzsystem des Kraftfahrzeugs die Manövrierdaten von der Infrastrukturvorrichtung der Parkfläche empfangen hat, kann dann das Kraftfahrzeug autonom von dem Einfahrtsbereich zu dem freien Stellplatz manövriert werden und auf dem freien Stellplatz eingeparkt werden. Damit ist es nicht erforderlich, dass der Fahrer des Kraftfahrzeugs selbst einen freien Stellplatz aufsucht und das Kraftfahrzeug dort eingeparkt.

Gemäß einer weiteren Ausgestaltung wird ein weiterer Fahrschlauch bestimmt, welcher von dem Stellplatz, auf welchem das Kraftfahrzeug abgestellt ist, zu einem Ausfahrtsbereich der Parkfläche führt. Das Verfahren kann auch dazu genutzt werden, das Kraftfahrzeug, welches auf einem der Stellplätze der Parkfläche abgestellt beziehungsweise geparkt ist, wieder aus der Parkfläche heraus zu manövrieren. Wenn der Fahrer das Kraftfahrzeug wieder benötigt, kann dies autonom mithilfe des Fahrerassistenzsystems zu dem Ausfahrtsbereich manövriert werden. Dieser Ausfahrtsbereich ist insbesondere einer Ausfahrt des Parkplatzes zugeordnet. Nachdem das Kraftfahrzeug mithilfe des Fahrerassistenzsystems autonom zu dem Ausfahrtsbereich manövriert wurde, kann der Fahrer wieder in das Kraftfahrzeug einsteigen und dieses manuell weiter fahren. Damit ist es nicht erforderlich, dass der Fahrer innerhalb der Parkfläche nach dem Kraftfahrzeug sucht, dieses aus dem Stellplatz ausparken anschließend zu dem Ausfahrtsbereich fährt.

Bevorzugt wird mittels des Fahrerassistenzsystems eine Trajektorie innerhalb des zumindest einen Fahrschlauchs bestimmt und das Kraftfahrzeug wird mittels des Fahrerassistenzsystems entlang der bestimmten Trajektorie manövriert. Wie bereits erläutert, beschreibt der zumindest eine Fahrschlauch den Bereich auf der Parkfläche, auf welchem das Kraftfahrzeug grundsätzlich manövriert werden kann, ohne dass eine Kollision mit einem Objekt, insbesondere einem geparkten Fahrzeug, und/oder einer Komponente der Parkfläche droht. Innerhalb des Fahrschlauchs kann nun das Kraftfahrzeug quasi eigenständig mithilfe des Fahrerassistenzsystems manövriert werden. Innerhalb des Fahrschlauchs kann mithilfe des Fahrerassistenzsystems eine Trajektorie beziehungsweise Bewegungsbahn bestimmt werden, entlang welcher dann das Kraftfahrzeug letztendlich autonom manövriert wird. Zum Bestimmen der Trajektorie können die äußeren Abmessungen des Kraftfahrzeugs und/oder ein Wendekreis des Kraftfahrzeugs berücksichtigt werden. Darüber hinaus können weitere Kriterien für die Bestimmung der Trajektorie herangezogen werden. Ein Kriterium kann dabei umfassen, dass das Kraftfahrzeug mit einer maximalen Geschwindigkeit bewegt werden kann. Das Kriterium kann auch beinhalten, dass die Trajektorie den kürzesten Weg beschreibt. Die Trajektorie kann auch so bestimmt, dass die Reifen des Kraftfahrzeugs möglichst genutzt werden. Insgesamt kann durch die Bestimmung der Trajektorie erreicht werden, dass das Kraftfahrzeug sicher und zuverlässig innerhalb des Fahrschlauchs manövriert wird.

Gemäß einer weiteren Ausführungsform wird der zumindest eine Fahrschlauch mittels der Infrastrukturvorrichtung in Abhängigkeit von zumindest einem vorbestimmten Optimierungskriterium bestimmt. Auch bei der Bestimmung des zumindest einen Fahrschlauchs können Optimierungskriterien von der Infrastrukturvorrichtung herangezogen werden. Beispielweise kann der Fahrschlauch so bestimmt werden, dass dieser den kürzesten Weg von dem Einfahrtsbereich zu dem freien Stellplatz beschreibt. Zudem kann der Fahrschlauch so bestimmt werden, dass dieser einen möglichst großen Abstand zu den geparkten Fahrzeugen aufweist. Somit kann auf zuverlässige Weise eine Kollision zwischen dem Kraftfahrzeug und den geparkten Fahrzeugen verhindert werden.

Bei der Bestimmung des Fahrschlauchs kann grundsätzlich unterschieden werden, ob das Fahrerassistenzsystem dazu ausgelegt ist, selbst eine Trajektorie innerhalb des Fahrschlauchs zu bestimmen. Hierzu können entsprechende Daten, die eine Ausgestaltung des Fahrerassistenzsystems beschreiben, von dem Fahrerassistenzsystem zu der Infrastrukturvorrichtung übertragen werden. Falls das Fahrerassistenzsystem die Trajektorie bestimmen kann, kann der Fahrschlauch verhältnismäßig groß beziehungsweise breit bestimmt werden. Falls das Fahrerassistenzsystem nicht oder nur im begrenzten Umfang dazu ausgelegt ist, die Trajektorie zu bestimmen, kann der Fahrschlauch verhältnismäßig schmal ausgelegt werden. Damit wird der Bereich, in welchem das Kraftfahrzeug bewegt werden kann, begrenzt. Auf diese Weise kann der Fahrschlauch in Abhängigkeit von dem Fahrerassistenzsystem des Kraftfahrzeugs bestimmt werden.

Gemäß einer weiteren Ausführungsform wird der zumindest eine Fahrschlauch derart bestimmt, dass eine Anzahl von auf der Parkfläche abgestellten Kraftfahrzeugen maximiert wird. Dies eignet sich insbesondere für Parkflächen, welche keine vorgegebenen Stellflächen aufweisen, welche beispielsweise durch Parkflächenmarkierungen vorgegeben sind. Grundsätzlich soll der Fahrschlauch so bestimmt werden, dass die Kraftfahrzeuge auf der Parkfläche möglichst dicht aneinander angeordnet werden können. Dabei kann es auch vorgesehen sein, dass die Kraftfahrzeuge derart auf der Parkfläche abgestellt werden können, dass einige der Kraftfahrzeuge durch weitere Kraftfahrzeuge blockiert werden. Mit anderen Worten können die Kraftfahrzeuge so geparkt werden, dass einige der Kraftfahrzeuge nicht mehr von ihrem Stellplatz zu dem Ausfahrtsbereich bewegt werden können. Dies eignet sich insbesondere für Anwendungen, bei denen mehrere Kraftfahrzeuge von den gleichen Typ auf der Parkfläche abgestellt werden. Dabei können die jeweiligen Fahrschläuche so bestimmt werden, dass zumindest ein Kraftfahrzeug eines Fahrzeugtyps von dem Stellplatz zu dem Ausfahrtsbereich bewegt werden kann. Dies ist insbesondere sinnvoll für Fahrzeughersteller, die ein Flottenmanagement durchführen wollen. Auch kann dies beispielsweise von Fahrzeugvermietern genutzt werden, bei denen es beispielsweise ausreichend ist, dass ein Kraftfahrzeug eines Typs verfügbar ist.

Weiterhin ist es vorteilhaft, wenn mit zumindest einem Umfeldsensor des Fahrerassistenzsystems zumindest ein Objekt auf der Parkfläche erfasst wird und mittels des Fahrerassistenzsystems Objektdaten bestimmt werden, welche das zumindest eine Objekt beschreiben. Wie bereits erläutert, kann das Fahrerassistenzsystem zumindest einen Umfeldsensor aufweisen, mit dem Objekte in der Umgebung des Kraftfahrzeugs beziehungsweise auf der Parkfläche erfasst werden können. Mit dem Fahrerassistenzsystem beziehungsweise mit einem Steuergerät des Fahrerassistenzsystems können dann die Objektdaten bereitgestellt werden, welches das zumindest eine Objekt beschreiben. Dabei ist es bevorzugt vorgesehen, dass die Objektdaten von dem Fahrerassistenzsystem an die Infrastrukturvorrichtung übertragen werden und die digitale Karte mittels der Infrastrukturvorrichtung anhand der Objektdaten aktualisiert wird. Somit kann die digitale Karte der Parkfläche fortlaufend anhand der Messungen, die mit dem Umfeldsensor des Fahrerassistenzsystems durchgeführt wurden, aktualisiert werden.

Eine erfindungsgemäße Infrastrukturvorrichtung für eine Parkfläche ist dazu ausgelegt, einen freien Stellplatz einer Mehrzahl von Stellplätzen der Parkfläche zu bestimmen, anhand einer digitalen Karte, welche die Parkfläche beschreibt, zumindest einen Fahrschlauch zu bestimmen, welcher zu dem freien Stellplatz führt und welcher einen Bereich der Parkfläche beschriebt, auf welchem das Kraftfahrzeug bewegbar ist, und Manövrierdaten zu bestimmen, welche den zumindest einen Fahrschlauch beschreiben. Zum Bestimmen beziehungsweise Ermitteln der freien Stellplätze kann die Infrastrukturvorrichtung Daten von Belegungssensoren der Parkfläche empfangen. Die Infrastrukturvorrichtung kann einen Speicher aufweisen, auf welchem die digitale Karte hinterlegt ist, welche die Parkfläche beschreibt. Zudem kann die Infrastrukturvorrichtung eine Recheneinrichtung aufweisen, mittels welcher der zumindest eine Fahrschlauch bestimmt werden kann. Ferner kann die Infrastrukturvorrichtung eine Kommunikationseinrichtung aufweisen, mittels welcher die bestimmten Manövrierdaten ausgesendet werden können. Zudem kann es vorgesehen sein, dass mittels der Kommunikationseinrichtung Objektdaten empfangen werden können, welche die Objekte der Parkfläche beschreiben.

Die Infrastrukturvorrichtung kann zudem zumindest zwei Kommunikationseinheiten aufweisen, welche dazu dienen, die Position des Kraftfahrzeugs zu bestimmen. Diese Kommunikationseinheiten, welche auch als Beacons bezeichnet werden können, können Daten drahtlos aussenden und/oder empfangen. Es kann auch vorgesehen sein, dass die Kommunikationseinheiten mit dem Fahrerassistenzsystem des Kraftfahrzeugs kommunizieren können. Somit kann die Position des Kraftfahrzeugs mittels Trilateration bestimmt werden. Dies kann für eine Vorlokalisierung des Kraftfahrzeugs genutzt werden.

Ein erfindungsgemäßes Fahrerassistenzsystem für ein Kraftfahrzeug umfasst eine Sende- und Empfangseinrichtung zum Empfangen von Manövrierdaten. Darüber hinaus ist das Fahrerassistenzsystem dazu ausgelegt, das Kraftfahrzeug in Abhängigkeit von den Manövrierdaten autonom zu manövrieren. Bevorzugt ist das Fahrerassistenzsystem dazu ausgelegt ist, eine Längsführung und/oder eine Querführung des Kraftfahrzeugs anhand der Manövrierdaten zu verändern. Zum Verändern der Längsführung und/oder der Querführung kann das Fahrerassistenzsystem in eine Lenkung, einen Antriebsmotor und/oder ein Bremssystem des Kraftfahrzeugs eingreifen. Zudem kann das Fahrerassistenzsystem einen Bewegungssensor umfassen, mittels welchem fortlaufend die Bewegung des Kraftfahrzeugs erfasst werden kann.

Dabei ist es bevorzugt vorgesehen, dass das Fahrerassistenzsystem zumindest einen Umfeldsensor zum Erfassen zumindest eines Objekts in einer Umgebung des Kraftfahrzeugs aufweist, wobei das Fahrerassistenzsystem dazu ausgelegt ist, Objektdaten zu bestimmen, welche das zumindest eine Objekt beschreiben.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Ein erfindungsgemäßes Kommunikationssystem umfasst ein erfindungsgemäßes Fahrerassistenzsystem sowie eine erfindungsgemäße Infrastrukturvorrichtung. Das Kommunikationssystem ist zum Durchführen eines erfindungsgemäßen Verfahrens und der vorteilhaften Ausgestaltungen davon ausgelegt.

Die mit Bezug auf das erfindungsgemäße Verfahren vorgestellten bevorzugten Ausführungsformen und deren Vorteile gelten entsprechend für das erfindungsgemäße Fahrerassistenzsystem, das erfindungsgemäße Kraftfahrzeug, die erfindungsgemäße Infrastrukturvorrichtung sowie das erfindungsgemäße Kommunikationssystem.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung, welches ein Fahrerassistenzsystem aufweist;
- Fig. 2: das Kraftfahrzeug, welches autonom auf einer Parkfläche innerhalb eines Fahrschlauchs zu einem freien Stellplatz manövriert wird; und
- Fig. 3: das Kraftfahrzeug, welches auf einer Parkfläche gemäß einer weiteren Ausführungsform entlang eines Fahrschlauchs manövriert wird.

In den Figuren werden gleiche und funktionsgleiche Elemente mit den gleichen Bezugszeichen versehen.

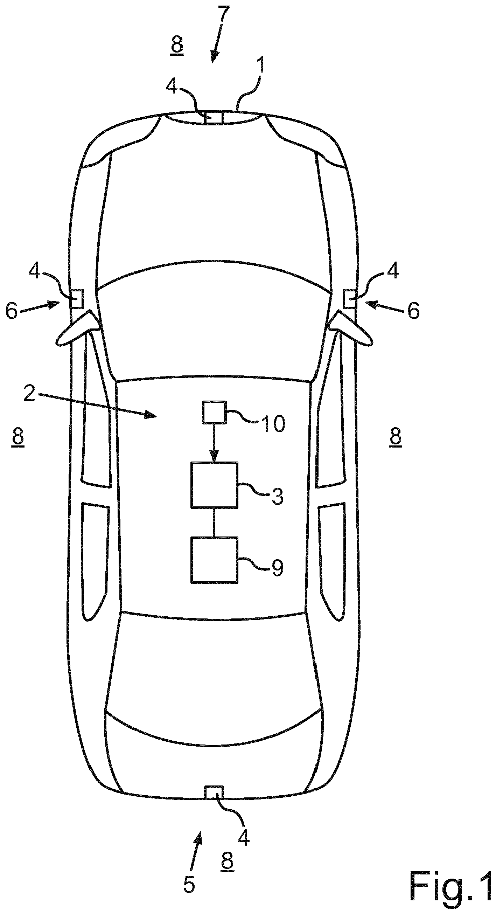

Fig. 1 zeigt ein Kraftfahrzeug 1 gemäß einer Ausführungsform der vorliegenden Erfindung in einer Draufsicht. Das Kraftfahrzeug 1 ist vorliegend als Personenkraftwagen ausgebildet. Das Kraftfahrzeug 1 umfasst ein Fahrerassistenzsystem 2. Das Fahrerassistenzsystem 2 umfasst ferner ein elektronisches Steuergerät 3. Darüber hinaus umfasst das Fahrerassistenzsystem 2 zumindest einen Umfeldsensor 4. In dem vorliegenden Ausführungsbeispiel umfasst das Fahrerassistenzsystem 2 vier Umfeldsensoren 4. Dabei sind die Umfeldsensoren 4 verteilt an dem Kraftfahrzeug 1 angeordnet. Dabei ist ein Umfeldsensor 4 in einem Heckbereich 5 angeordnet, ein Umfeldsensor 4 ist in einem Frontbereich 7 angeordnet und die übrigen Umfeldsensoren 4 sind in einem jeweiligen Seitenbereich 6, insbesondere in einem Bereich der Seitenspiegel, angeordnet. Die Anzahl und Anordnung der Umfeldsensoren 4 des Fahrerassistenzsystems 2 ist vorliegend rein beispielhaft zu verstehen.

Mit Hilfe der Umfeldsensoren 4 kann eine Umgebung 8 beziehungsweise ein Umgebungsbereich des Kraftfahrzeugs 1 erfasst werden. Die Umfeldsensoren 4 können bevorzugt als Kamera ausgebildet sein. Mit den jeweiligen Kameras kann eine Bildsequenz oder Videodaten bereitgestellt werden, welche die Umgebung 8 beschreiben. Diese Videodaten können von dem Steuergerät 3 ausgewertet werden. Hierzu ist das Steuergerät 3 über entsprechende, hier nicht dargestellte, Datenleitungen mit den Umfeldsensoren 4 verbunden. Beispielsweise kann das Steuergerät 3 einen entsprechenden Bildverarbeitungsalgorithmus oder Objekterkennungsalgorithmus nutzen, um Objekte in der Umgebung 8 zu erkennen.

Darüber hinaus umfasst das Fahrerassistenzsystem 2 eine Sende- und Empfangseinrichtung 9. Mit der Sende- und Empfangseinrichtung 9 können Daten drahtlos ausgesendet und/oder empfangen werden. Die Sende- und Empfangseinrichtung 9 ist zur Datenübertragung dem Steuergerät 3 verbunden. Beispielsweise können mit der Sende- und Empfangseinrichtung 9 Manövrierdaten empfangen werden und an das Steuergerät 3 übertragen werden. In Abhängigkeit von den empfangenen Manövrierdaten kann dann das Fahrerassistenzsystem 2 beziehungsweise das Steuergerät 3 die Längsführung und/oder die Querführung des Kraftfahrzeugs 1 beeinflussen. Hierzu kann das Fahrerassistenzsystem 2 beziehungsweise das Steuergerät 3 in die Lenkung, einen Antriebsmotor und/oder ein Bremssystem des Kraftfahrzeugs 1 eingreifen.

Schließlich umfasst das Fahrerassistenzsystem 2 einen Bewegungssensor 10. Mithilfe des Bewegungssensors 10 kann die Bewegung des Kraftfahrzeugs 1 fortlaufend bestimmt werden. Der vorliegende schematisch dargestellte Bewegungssensor 10 kann beispielsweise die Umdrehungen zumindest eines Rades des Kraftfahrzeugs 1 bestimmen. Zudem kann mit dem Bewegungssensor 10 fortlaufend ein aktueller Lenkwinkel des Kraftfahrzeugs 1 bestimmt werden. Der Bewegungssensor 10 ist zudem mit dem Steuergerät 3 zur Datenübertragung verbunden. Somit liegen dem Steuergerät 3 Daten über die aktuelle Bewegung des Kraftfahrzeugs 1 vor. Diese möglich es beispielsweise, dass das Fahrerassistenzsystem 2 das Kraftfahrzeug 1 auf Grundlage von Odometrie manövrieren kann.

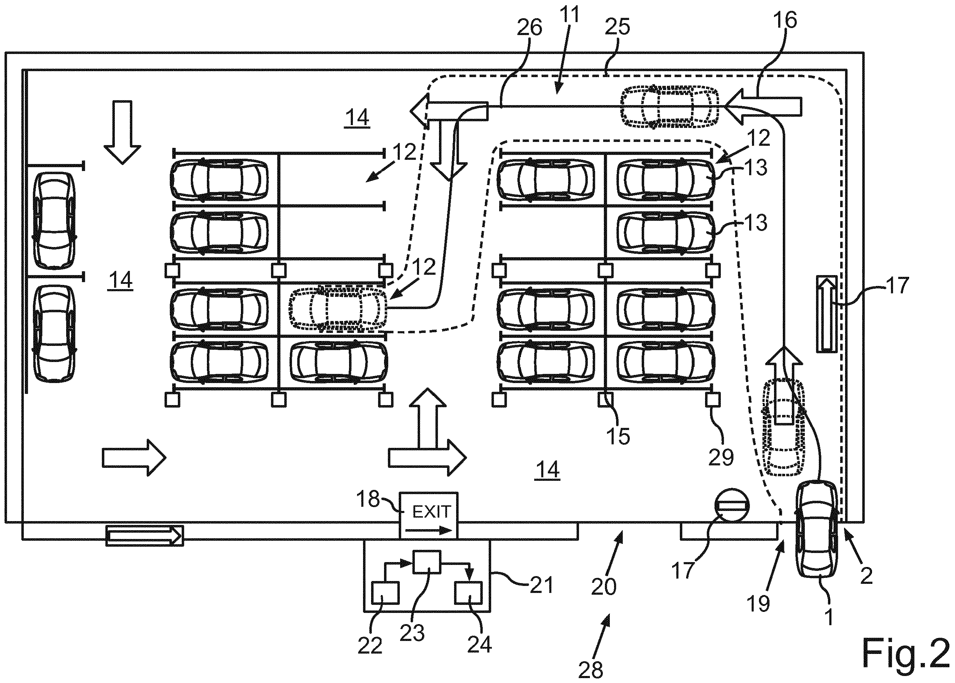

Fig. 2 zeigt das Kraftfahrzeug 1, welches auf einer Parkfläche 11 autonom manövriert wird. Die Parkfläche 11 kann beispielsweise einem öffentlichen Parkplatz, einem Parkhaus, einen Parkplatz oder dergleichen zugeordnet sein. Die Parkfläche 11 umfasst eine Mehrzahl von Stellplätzen 12, auf denen weitere Kraftfahrzeuge 13 abgestellt beziehungsweise geparkt sind. Darüber hinaus umfasst die Parkfläche 11 eine Mehrzahl von Fahrgassen 14, auf denen das Kraftfahrzeug 1 manövriert werden kann, um zu den Stellplätzen 12 zu gelangen. Die Stellplätze 12 sind durch Parkflächenmarkierungen 15 gekennzeichnet. Zudem weist die Parkfläche 11 einen Einfahrtsbereich 19 sowie einen Ausfahrtsbereich 20 auf. Zudem sind auf der Parkfläche 11 mehrere Pfeiler 29 beziehungsweise Säulen angeordnet. Auf den Fahrgassen 14 befinden sich unterschiedliche Markierungselemente 16 in Form von Pfeilen beziehungsweise Richtungspfeilen. Des Weiteren umfasst die Parkfläche 11 Verkehrsschilder 17, welche eine vorgegebene Fahrtrichtung auf den Fahrgassen 14 beschreiben. Außerdem weist die Parkfläche 11 ein Hinweisschild 20 auf, welches den Fahrweg zu einer Ausfahrt beziehungsweise zu einem Ausfahrtsbereich 20 der Parkfläche 11 beschreibt.

Der Parkfläche 11 ist eine Infrastrukturvorrichtung 21 zugeordnet, welche einen Speicher 22 aufweist. Auf dem Speicher 22 ist eine digitale Karte der Parkfläche 11 hinterlegt. Diese digitale Karte beschreibt die räumliche Ausgestaltung beziehungsweise die Abmessungen der Parkfläche 11. Insbesondere beschreibt die digitale Karte die Ausgestaltung und Anordnung der Stellplätze 12, der Fahrgassen 14, der Pfeiler 29, des Einfahrtsbereichs 19 und/oder des Ausfahrtsbereichs 20. Darüber hinaus sind in der digitalen Karte die Parkflächenmarkierungen 15, die Markierungselemente 16, die Verkehrsschilder 17 sowie das Hinweisschilder 18 hinterlegt. Ferner umfasst die Infrastrukturvorrichtung 21 eine Recheneinrichtung 23, mittels welcher ein freier Stellplatz 12 bestimmt werden kann. Zu diesem Zweck kann die Recheneinrichtung 23 Daten von nicht dargestellten Belegungssensoren der Parkfläche 11 empfangen.

Mithilfe der Recheneinrichtung 23 kann nun ein freier Stellplatz 12 für das Kraftfahrzeug 1 ausgewählt werden. Dabei soll das Kraftfahrzeug 1, welches sich vorliegend an dem Einfahrtsbereich 19 befindet, zu dem freien Stellplatz 12 manövriert werden. Anhand der digitalen Karte kann nun mit der Recheneinrichtung 23 ein Fahrschlauch 25 bestimmt werden. Der Fahrschlauch 25 führt vorliegend von dem Einfahrtsbereich 19 zu dem freien Stellplatz 12. Dabei beschreibt der Fahrschlauch 25 einem Bereich der Parkfläche 11, auf welchem das Kraftfahrzeug 1 kollisionsfrei manövriert werden kann. Dabei ist der Fahrschlauch 25 derart bestimmt, dass keine Kollision zwischen dem Kraftfahrzeug 1 und den geparkten Kraftfahrzeugen 13 und/oder den Pfeilern 29 droht.

Mithilfe der Recheneinrichtung 23 werden Manövrierdaten bestimmt, welche den bestimmten Fahrschlauch 25 beschreiben. Diese Manövrierdaten beschreiben den Fahrschlauch 25 relativ zu Landmarken 27. Als Landmarken 27 können vorliegend die Parkflächenmarkierungen 15, die Markierungselemente 16, die Verkehrsschilder 17, das Hinweisschild 18 sowie die Pfeiler 29 genutzt werden. Diese Manövrierdaten, die mit der Recheneinrichtung 23 bestimmt werden, werden mittels einer Kommunikationseinrichtung 24 der Infrastrukturvorrichtung 21 drahtlos an das Kraftfahrzeug 1 beziehungsweise die Sende- und Empfangseinrichtung 9 des Fahrerassistenzsystems 2 übertragen. Das Fahrerassistenzsystem 2 und die Infrastrukturvorrichtung 21 bilden zusammen ein Kommunikationssystem 28.

Das Kraftfahrzeug 1 soll nun mithilfe des Fahrerassistenzsystems 2 autonom von dem Einfahrtsbereich 19 zu dem freien Stellplatz 12 manövriert werden. Zu diesem Zweck wird mittels des Fahrerassistenzsystems eine Trajektorie 26 innerhalb des Fahrschlauchs 25 bestimmt. Die Trajektorie 26 kann auf Grundlage der äußeren Abmessungen und/oder eines Wendekreises des Kraftfahrzeugs 1 bestimmt werden. Entlang dieser Trajektorie 26 wird dann das Kraftfahrzeug 1 autonom manövriert. Während des Manövrierens des Kraftfahrzeugs 1 wird die Position des Kraftfahrzeugs 1 fortlaufend mithilfe des Bewegungssensors 10 beziehungsweise mittels Odometrie bestimmt. Zudem werden während des Manövrierens die Landmarken 27 auf der Parkfläche 11 mithilfe der Umfeldsensors 4 erfasst. Mithilfe des Steuergeräts 3 des Fahrerassistenzsystems 2 kann dann die relative Lage zwischen dem Kraftfahrzeug 1 und den jeweiligen Landmarken 27 bestimmt werden. Somit können Fehler der Odometrie ausgeglichen werden.

In gleicher Weise kann der Infrastrukturvorrichtung 21 beziehungsweise mit der Recheneinrichtung 23 ein Fahrschlauch bestimmt werden, welcher von dem Stellplatz 22, auf welchem das Kraftfahrzeug 1 abgestellt ist, zu dem Ausfahrtsbereich 20 führt.

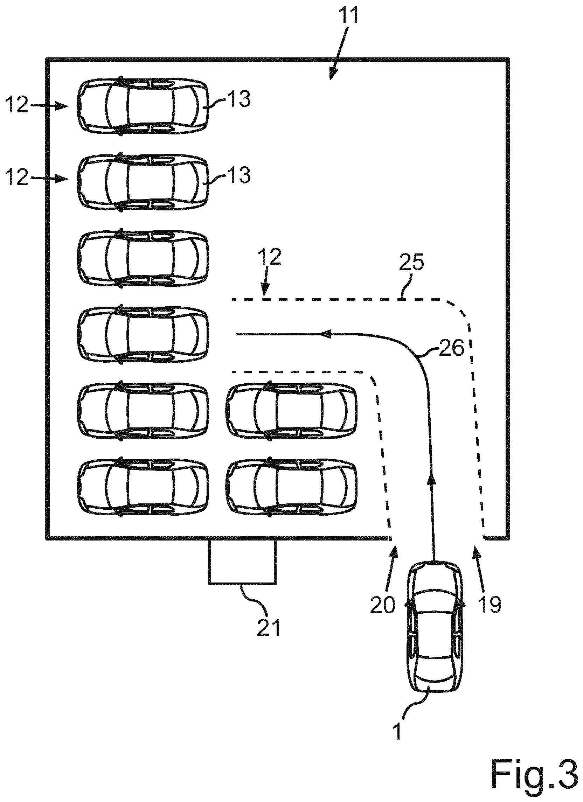

Fig. 3 zeigt eine Parkfläche 11 gemäß einer weiteren Ausführungsform. Auch dieser Parkfläche 11 befindet sich bereits eine Mehrzahl von geparkten Kraftfahrzeugen 13, welche auf jeweiligen Stellplätzen 12 abgestellt sind. Dabei sind die Stellplätze 12 nicht fest durch Parkflächenmarkierungen 15 vorgegeben. Vorliegend entspricht der Einfahrtsbereich 19 dem Ausfahrtsbereich 20. Auch in diesem Fall wird mithilfe der Infrastrukturvorrichtung 21 ein Fahrschlauch 25 für das Kraftfahrzeug 1 bestimmt. Dabei wird der Fahrschlauch 25 derart bestimmt, dass das Kraftfahrzeug 1 zu einem vorbestimmten Stellplatz 12 geführt wird. Dieser Stellplatz 12 für das Kraftfahrzeug 1 ist derart bestimmt, dass das Kraftfahrzeug 1 und die weiteren Kraftfahrzeuge 13 auf der Parkfläche 11 möglichst dicht beziehungsweise mit einer hohen Packungsdichte geparkt werden können. Dabei ist der Fahrschlauch 25, welcher von dem Einfahrtsbereich 19 zu dem bestimmten Stellplatz 12 führt im Vergleich zu dem Fahrschlauch 25, der in Fig. 2 gezeigt ist, enger beziehungsweise schmaler gewählt. Somit kann erreicht werden, dass das Kraftfahrzeug 1 mithilfe des Fahrerassistenzsystems 2 präzise auf den vorbestimmten Stellplatz 12 manövriert wird und somit die Anzahl der Kraftfahrzeuge 13 auf der Parkfläche 11 maximiert werden kann.

Ferner ist der Stellplatz 12 für das Kraftfahrzeug 1 auch derart bestimmt, dass einige der weiteren Kraftfahrzeuge 13 durch das Kraftfahrzeug 1 blockiert sind beziehungsweise nicht mehr zu dem Ausfahrtsbereich manövriert werden können. Eine derartige Konstellation eignet sich beispielsweise, wenn es gefordert wird, dass nur bestimmte Kraftfahrzeuge 13 eines Fahrzeugtyps erreichbar sein müssen beziehungsweise zu dem Ausfahrtsbereich 20 bewegt werden können müssen.

## Patentansprüche

1. Verfahren zum autonomen Manövrieren eines Kraftfahrzeugs (1) auf einer Parkfläche (11), welche eine Mehrzahl von Stellplätzen (12) für das Kraftfahrzeug (1) aufweist, bei welchem mittels einer Infrastrukturvorrichtung (21) der Parkfläche (11) ein freier Stellplatz (12) der Mehrzahl von Stellplätzen (12) erkannt wird, Manövrierdaten, welche den freien Stellplatz (12) beschreiben, bestimmt werden sowie an ein Fahrerassistenzsystem (2) des Kraftfahrzeugs (1) übertragen werden und das Kraftfahrzeug (1) anhand der Manövrierdaten autonom zu dem freien Stellplatz (12) manövriert wird,
**dadurch gekennzeichnet, dass**
mittels der Infrastrukturvorrichtung (21) anhand einer digitalen Karte, welche die Parkfläche (11) beschreibt, zumindest ein Fahrschlauch (25) bestimmt wird, welcher zu dem freien Stellplatz (12) führt und welcher einen Bereich der Parkfläche (11) beschreibt, auf welchem das Kraftfahrzeug (1) während des Manövrierens bewegbar ist, wobei die Manövrierdaten den zumindest einen Fahrschlauch (25) beschreiben und das Kraftfahrzeug (1) mittels des Fahrerassistenzsystems (2) innerhalb des Fahrschlauchs (25) autonom manövriert wird.

2. Verfahren nach Anspruch 1,
**dadurch gekennzeichnet, dass**
anhand der digitalen Karte zumindest eine Landmarke (27) der Parkfläche (11) bestimmt wird und der zumindest eine Fahrschlauch (25) relativ zu der zumindest einen Landmarke (27) bestimmt wird.

3. Verfahren nach Anspruch 2,
**dadurch gekennzeichnet, dass**
während des Manövrierens des Kraftfahrzeugs (1) mittels zumindest eines Umfeldsensors (4) eine relative Lage zwischen dem Kraftfahrzeug (1) und der zumindest einen Landmarke (27) bestimmt wird und das Kraftfahrzeug (1) in Abhängigkeit von der relativen Lage manövriert wird.

4. Verfahren nach einem der vorhergehenden Ansprüche,
**dadurch gekennzeichnet, dass**
der zumindest eine Fahrschlauch (25) von einem Einfahrtsbereich (19) der Parkfläche (11) zu dem freien Stellplatz (12) führt.

5. Verfahren nach einem der vorhergehenden Ansprüche,
**dadurch gekennzeichnet, dass**
ein weiterer Fahrschlauch bestimmt wird, welcher von dem Stellplatz (12), auf welchem das Kraftfahrzeug (1) abgestellt ist, zu einem Ausfahrtsbereich (20) der Parkfläche (11) führt.

6. Verfahren nach einem der vorhergehenden Ansprüche,
**dadurch gekennzeichnet, dass**
mittels des Fahrerassistenzsystems (2) eine Trajektorie (26) innerhalb des zumindest einen Fahrschlauchs (25) bestimmt wird und das Kraftfahrzeug (1) mittels des Fahrerassistenzsystems (2) entlang der bestimmten Trajektorie (26) manövriert wird.

7. Verfahren nach einem der vorhergehenden Ansprüche,
**dadurch gekennzeichnet, dass**
der zumindest eine Fahrschlauch (25) mittels der Infrastrukturvorrichtung (21) in Abhängigkeit von zumindest einem vorbestimmten Optimierungskriterium bestimmt wird.

8. Verfahren nach einem der vorhergehenden Ansprüche,
**dadurch gekennzeichnet, dass**
der zumindest eine Fahrschlauch (25) derart bestimmt wird, dass eine Anzahl von auf der Parkfläche (11) abgestellten Kraftfahrzeugen (1, 13) maximiert wird.

9. Verfahren nach einem der vorhergehenden Ansprüche,
**dadurch gekennzeichnet, dass**
mit zumindest einem Umfeldsensor (4) des Fahrerassistenzsystems (2) zumindest ein Objekt auf der Parkfläche (11) erfasst wird und mittels des Fahrerassistenzsystems (2) Objektdaten bestimmt werden, welche das zumindest eine Objekt beschreiben.

10. Verfahren nach Anspruch 9,
**dadurch gekennzeichnet, dass**
die Objektdaten von dem Fahrerassistenzsystem (2) an die Infrastrukturvorrichtung (21) übertragen werden und die digitale Karte mittels der Infrastrukturvorrichtung (21) anhand der Objektdaten aktualisiert wird.

11. Infrastrukturvorrichtung (21) für eine Parkfläche (11), welche dazu ausgelegt ist, einen freien Stellplatz (12) einer Mehrzahl von Stellplätzen (12) der Parkfläche (11) zu bestimmen, anhand einer digitalen Karte, welche die Parkfläche (11) beschreibt, zumindest einen Fahrschlauch (25) zu bestimmen, welcher zu dem freien Stellplatz (12) führt und welcher einen Bereich der Parkfläche (11) beschriebt, auf welchem das Kraftfahrzeug (1) bewegbar ist, und Manövrierdaten zu bestimmen, welche den zumindest einen Fahrschlauch (25) beschreiben.

12. Fahrerassistenzsystem (2) für ein Kraftfahrzeug (1), mit einer Sende- und Empfangseinrichtung (9) zum Empfangen von Manövrierdaten, wobei das Fahrerassistenzsystem (2) dazu ausgelegt ist, das Kraftfahrzeug (1) in Abhängigkeit von den Manövrierdaten autonom zu manövrieren.

13. Fahrerassistenzsystem (2) nach Anspruch 12,
**dadurch gekennzeichnet, dass**
das Fahrerassistenzsystem (2) zumindest einen Umfeldsensor (4) zum Erfassen zumindest eines Objekts in einer Umgebung (7) des Kraftfahrzeugs (1) aufweist, wobei das Fahrerassistenzsystem (2) dazu ausgelegt ist, Umgebungsdaten zu bestimmen, welche das zumindest eine Objekt beschreiben.

14. Kraftfahrzeug (1) mit einem Fahrerassistenzsystem (2) nach Anspruch 12 oder 13.

15. Kommunikationssystem (28) mit einer Infrastrukturvorrichtung (21) nach Anspruch 11 und mit einem Fahrerassistenzsystem (2) nach Anspruch 12 oder 13.
